# EUROPÄISCHE PATENTSCHRIFT

(11) **EP 1 651 992 B1**
(45) Veröffentlichungstag und Bekanntmachung des Hinweises auf die Patenterteilung: **16.02.2011**
(21) Anmeldenummer: 04766317.4
(22) Anmeldetag: 26.07.2004
(51) Int. Cl.: G02B 21/00, G02B 21/18

(54) **RASTERMIKROSKOP**
SCANNING MICROSCOPE
MICROSCOPE A BALAYAGE

(30) Priorität: 26.07.2003 DE 10334145
(43) Veröffentlichungstag der Anmeldung: 03.05.2006
(73) Patentinhaber: Leica Microsystems CMS GmbH, 35578 Wetzlar (DE)
(72) Erfinder: KNEBEL, Werner, 76709 Kronau (DE)
(74) Vertreter: Schaumburg, Thoenes, Thurn, Landskron, Eckert
(86) Internationale Anmeldenummer: PCT/EP2004/051606
(87) Internationale Veröffentlichungsnummer: WO 2005/010590

(56) Entgegenhaltungen:
- EP-A- 0 495 930
- WO-A-02/14811
- WO-A-03/012516
- WO-A-03/090613
- DE-A- 10 004 191
- DE-A- 19 859 314
- DE-U- 20 206 153
- US-A1- 2002 097 485
- US-A1- 2003 133 189

## Beschreibung

Die Erfindung betrifft ein Rastermikroskop mit mindestens einer Lichtquelle, die einen Beleuchtungsstrahlengang definiert und mit einem Spektraldetektor zum Detektieren des von der Probe ausgehenden Detektionslichtes, der einen Detektionsstrahlengang definiert und der ein spektral aufspaltendes Bauteil beinhaltet.

In der Rastermikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Rastermikroskopie wird ein Objekt mit dem Fokus eines Lichtstrahles in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird oft über den Strahlteiler, der beispielsweise als Neutralstrahlteiler oder als dichroitischer Strahlteiler ausgeführt sein kann, eingekoppelt. Neutralstrahlteiler haben den Nachteil, dass je nach Teilungsverhältnis viel Anregungs- oder viel Detektionslicht verloren geht.

Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatennahme erzielt, wobei die Bahn des Abtastlichtstrahles auf bzw. in dem Objekt idealerweise einen Mäander beschreibt. (Abtasten einer Zeile in x-Richtung bei konstanter y-Position, anschließend x-Abtastung anhalten und per y-Verstellung auf die nächste abzutastende Zeile schwenken und dann, bei konstanter y-Position, diese Zeile in negative x-Richtung abtasten u.s.w.). Um eine schichtweise Bilddatennahme zu ermöglichen, wird der Probentisch oder das Objektiv nach dem Abtasten einer Schicht verschoben und so die nächste abzutastende Schicht in die Fokusebene des Objektivs gebracht.

Bei vielen Anwendungen werden Proben mit mehreren Markern, beispielsweise mehreren unterschiedlichen Fluoreszenzfarbstoffen präpariert. Diese Farbstoffe können sequentiell, beispielsweise mit Beleuchtungslichtstrahlen, die unterschiedliche Anregungswellenlängen aufweisen, angeregt werden. Auch eine simultane Anregung mit einem Beleuchtungslichtstrahl, der Licht mehrerer Anregungswellenlängen beinhaltet, ist üblich. Aus der Europäischen Patentanmeldung EP 0 495 930: "Konfokales Mikroskopsystem für Mehrfarbenfluoreszenz" ist beispielsweise eine Anordnung mit einem einzelnen mehrere Laserlinien emittierenden Laser bekannt. Derzeit sind in der Praxis solche Laser meist als Mischgaslaser, insbesondere als ArKr-Laser, ausgebildet.

Zur simultanen Detektion des von der Probe ausgehenden Detektionslichtes werden oft Multibanddetektoren eingesetzt. Aus der Offenlegungsschrift DE 4330347 A1 ist eine Vorrichtung zur Selektion und Detektion mindestens zweier Spektralbereiche eines Lichtstrahls, mit einer Selektionseinrichtung und einer Detektionseinrichtung bekannt. Die Vorrichtung ist zur zuverlässigen gleichzeitigen Selektion und Detektion unterschiedlicher Spektralbereiche bei hoher Ausbeute und bei einfachster Konstruktion derart ausgestaltet, dass die Selektionseinrichtung Bauteil zur spektralen Aufspaltung des Lichtstrahls - beispielsweise ein Prisma oder ein Gitter - und Mittel einerseits zum Ausblenden eines ersten Spektralbereichs und andererseits zur Reflexion zumindest eines Teils des nicht ausgeblendeten Spektralbereichs und die Detektionseinrichtung einen im Strahlengang des ausgeblendeten ersten Spektralbereichs angeordneten ersten Detektor und einen im Strahlengang des reflektierten Spektralbereichs angeordneten zweiten Detektor umfasst. Als Mittel zum Ausblenden eines ersten Spektralbereichs und andererseits zur Reflexion zumindest eines Teils des nicht ausgeblendeten Spektralbereichs ist vorzugsweise eine Spaltblendenvorrichtung mit verspiegelten Blendenbacken vorgesehen. Die Vorrichtung ist insbesondere als Multibanddetektor in einem Rastermikroskop einsetzbar.

Aus der Deutschen Offenlegungsschrift DE 198 42 288 A1 ist eine Vorrichtung zur einstellbaren Einkopplung und/oder Detektion einer oder mehrerer Wellenlängen in einem Mikroskop bekannt. Die Vorrichtung besteht aus mindestens einem displersiven Element zur Wellenlängenseperation des Beleuchtungslichts sowie mindestens einem im wellenlängenseparierten Teil des Beleuchtungslichts angeordneten, zumindest teilweise reflextiven Element zur Rückreflexion mindestens eines Wellenlängenbereichs in Richtung der Mikroskopbeleuchtung. Außerdem sind zur einstellbaren Detektion im wellenlängenseparierten Teil des Objektlichtes Mittel zur einstellbaren Ausblendung mindestens eines Wellenlängenbereichs und Mittel zur Ablenkung des ausgeblendeten Wellenlängenbereichs in Richtung mindestens eines Detektors vorgesehen. Nicht zuletzt aufgrund der Variabilität in Bezug auf die auszublendenden Wellenlängenbereiche ist die Vorrichtung apparativ sehr aufwendig und kompliziert.

Aus der Patentschrift DE 195 10 102 C1 ist ein halbkonfokales Fluoreszenzmikroskop bekannt, bei der das Beleuchtungslicht einer Lichtquelle mit Hilfe einer Spektrometeranordnung spektral zerlegt und über eine Wellenlängenselektionsblende und eine weitere Spektrometeranordnung zur streifenförmigen Beleuchtung auf eine Probe gelenkt wird. Das von der Probe ausgehende Detektionslicht wird von der weiteren Spektrometeranordnung spektral zerlegt und über die Wellenlängenselektionsblende und eine dritte Spektrometeranordnung nach Passieren einer Streifenlochblende einer Detektoranordnung zugeführt. Die Wellenlängenselektionsblende ist zur Einstellung der jeweiligen Wellenlängenbereiche verschiebbar angeordnet. Die Anordnung ist insbesondere dadurch, dass zumindest drei Spektrometeranordnungen notwendig sind, konstruktiv aufwendig und schwer zu justieren.

Aus der DE 100 04 191 A1 ist ein Rastermikroskop bekannt, das als Hauptstrahlteiler zwei Prismen hat, die miteinander gekoppelt sind. Beleuchtungslicht tritt geradlinig durch die beiden Prismen. Das von der Probe ausgehende Detektionslicht wird an einer Grenzfläche eines der beiden Prismen total reflektiert und zu einem Detektor abgelenkt.

Es ist Aufgabe der vorliegenden Erfindung ein Rastermikroskop anzugeben, das bei einfacher Bauweise sowohl die Einkopplung von Beleuchtungslicht vorzugsweise mehrerer Wellenlängen, als auch die Detektion von Detektionslicht in mehreren Wellenlängenbereichen gestattet.

Diese Aufgabe wird durch ein Rastermikroskop gelöst, das ein Prisma hat, das den Beleuchtungs- und den Detektionsstrahlengang trennt. Das Prisma hat eine Grenzfläche, die reflektierende Bereiche und nicht reflektierende Bereiche aufweist. Die reflektierenden und nicht reflektierenden Bereiche sind abwechselnd nebeneinander angeordnet. Die Beleuchtungslichtstrahlen treffen jeweils auf die nicht reflektierenden Bereiche und transmittieren in das Prisma. Das Prisma spaltet das Fluoreszenz-Detektionslicht räumlich spektral auf. Die reflektierenden Bereiche reflektieren das Fluoreszenz-Detektionslicht intern.

Die Erfindung hat den Vorteil, dass ein in vielen Gerätetypen vorhandenes Bauteil, nämlich das Bauteil zur spektralen Aufspaltung des Detektionslichtes, nämlich das Prisma, gleichzeitig zur Einkopplung des Beleuchtungslichtes verwendet wird, wodurch die Verwendung von weiteren teuren, den Strahlengang verkomplizierenden Bauteilen weitgehend vermieden ist. Vorteilhafterweise übernimmt bei dem erfindungsgemäßen Rastermikroskop das spektral aufspaltende Bauteil die Funktion des Hauptstrahlteilers, nämlich die Separation von Beleuchtungsstrahlengang und Detektionsstrahlengang, wobei die bei Hauptstrahlteilern auf der Basis von Neutralstrahlteilern auftretenden Probleme, nämlich die enormen Verluste an Lichtleistung, nicht auftreten.

Vorzugsweise ist die Grenzfläche des Prismas zumindest teilweise reflektierend beschichtet. In einer besonderen Ausgestaltungsform durchläuft das Detektionslicht zur spektralen Aufspaltung das Prisma und wird dabei intern an den reflektierend beschichteten Teilen der Grenzfläche reflektiert. Neben bzw. zwischen den reflektierend beschichteten Teilen der Grenzfläche ist keine oder vorzugsweise eine Antireflexbeschichtung vorgesehen, durch die das Beleuchtungslicht eingekoppelt wird.

In einer anderen Variante trifft das Beleuchtungslicht auf die reflektierend beschichteten Teile der Grenzfläche und das Detektionslicht auf die nicht bzw. antireflexbeschichteten Teile der Grenzfläche.

Die reflektierend beschichteten Teile der Grenzfläche und die nicht reflektierend beschichteten Teile der Grenzfläche sind abwechselnd nebeneinander angeordnet. Erfindungsgemäß wird hierbei die Tatsache ausgenutzt, dass aufgrund der Stokes-Shift bei fluoreszierenden Proben die Beleuchtungslichtwellenlänge gegen die Detektionslicht-Wellenlänge spektral verschoben ist, beispielsweise durch Verschieben des Prismas entlang der Grenzfläche und senkrecht zur Aufspaltungsrichtung des Detektionslichts wird eine Einstellbarkeit der Beleuchtungs/Detektionswellenlängenbereiche ermöglicht.

In einer ganz besonders bevorzugten Ausgestaltungsform ist zur Erzielung einer besonders stabilen und kompakten einfachen Bauweise das spektral aufspaltende Bauteil ortsfest angeordnet, wodurch die Anzahl und die Wellenlänge der zu verwendeten Beleuchtungslinien zwar unveränderbar festgelegt ist, was jedoch für die Mehrzahl der mikroskopischen Anwendungen absolut ausreicht.

Durch Verschieben des bzw. der Beleuchtungslichtstrahlen relativ zu den beschichteten bzw. nicht beschichteten Teilen der Grenzflächen, kann auf einfache Weise eine Leistungsregulierung vorgenommen werden. Hierbei wird der bzw. werden die Beleuchtungslichtstrahlen seitlich beschnitten.

Vorzugsweise sind die Teile der Grenzfläche, über die das Beleuchtungslicht eingekoppelt wird, ca. 100 µm breit. Vorzugsweise ist das Verhältnis der Breiten der Teile der Grenzfläche, über die das Detektionslicht zu den Detektoren gelangt zu den Teilen der Grenzfläche, über die das Beleuchtungslicht eingekoppelt wird, möglichst groß, um möglichst kleine Lücken im Detektionsspektrum zu haben.

In einer anderen besonders bevorzugten Ausführungsvariante wird entweder das Detektionslicht oder das Beleuchtungslicht total intern reflektiert. Bei dieser Variante ist keine reflektierende Beschichtung nötig. Vorzugsweise ist hierfür die Grenzfläche des Prismas gestuft oder sägezahnförmig strukturiert, so dass beispielsweise das Detektionslicht unter einem Winkel auf die Grenzfläche trifft, der eine total interne Reflektion hervorruft, während das Beleuchtungslicht unter einem Winkel auftrifft, der eine Transmission erlaubt. Selbstverständlich ist es auch möglich, dass umgekehrt das Beleuchtungslicht total intern reflektiert wird, während das Detektionslicht transmittiert wird.

In einer anderen Variante trägt die Grenzfläche Stege aus einem Material, das einen anderen Brechungsindex als das Prisma aufweist. Hierdurch wird auf einfache Weise eine Konfiguration erzeugt, bei der Bereiche der Grenzfläche mit total interner Reflektion und nicht total interner Reflektion nebeneinander angeordnet sind.

In einer bevorzugten Ausgestaltung beinhaltet das Beleuchtungslicht beispielsweise drei ausgewählte Laserlinien (z.B. 488nm, 560nm und 633nm, oder irgendeine andere Kombination, die vorzugsweise fest vorgegeben ist). Diese werden durch die beschichtete Grenzfläche im passenden Winkel in das Prisma eingekoppelt und somit kollinear zum Detektionsstrahlengang. Der Beleuchtungslichtstrahlengang verläuft dann in umgekehrter Richtung, passiert das Beleuchtungs- und Detektionspinhole (die in dieser Variante identisch sind), gelangt zur Strahlablenkeinheit und wird über Tubus- und Scanlinse durch das Objektiv auf die Probe gelenkt.

Es können auch Beleuchtungslicht von vier Laserlinien oder mehr verwendet werden, was beispielsweise bei Rastermikroskopen auf der Basis von Strahlteilern nicht möglich ist, da es zur Zeit keine multichroitischen Strahlteiler gibt, mit denen man Beleuchtungslicht von vier Laserlinien oder mehr gleichzeitigin ein Mikroskop einkoppeln kann.

Vorteilhafter Weise ist erfindungsgemäß auch zusätzlich die Einkopplung von Beleuchtungslicht mit einer Wellenlänge von 532 nm ermöglicht, was mit herkömmlichen Strahlteilern ebenfalls nicht realisierbar ist, da die 532 nm - Linie zu dicht zwischen den Ar-Linien ist.

Vorzugsweise beträgt die räumliche Breite des aufgespaltenen Detektionslichtes an der Grenzfläche ca. 1 cm bei einer spektralen Breite von etwa 400 nm entspricht. Durch 100µm breite nicht - oder antireflexbeschichtete Einkoppeschlitze werden folglich jeweils nur 4nm würden dem Detektionsspektrum herausgeschnitten, was für die meisten Anwendungen akzeptabel ist. Außerdem gelangt reflektiertes Beleuchtungslicht über dieselbe Grenzfläche zum Laser zurück und wird somit vorteilhafter Weise aus dem Detektionsstrahlengang ausgekoppelt.

Denkbar ist auch die Verwendung anderer Prismen oder anderer Prismentypen, bei dem die räumlich spektrale Aufspaltung an der Grenzfläche größer ist, so dass das Beleuchtungslicht nicht so stark auf die nicht reflektierenden Teile, nämlich die Einkoppelschlitze, der Grenzfläche fokussiert werden müssen.

In einer ganz besonders bevorzugten Ausgestaltung ist das Rastermikroskop als konfokales Rastermikroskop ausgebildet.

In der Zeichnung ist der Erfindungsgegenstand schematisch dargestellt und wird anhand der Figuren nachfolgend beschrieben, wobei gleich wirkende Bauteile mit denselben Bezugszeichen versehen sind. Dabei zeigen:
- Fig. 1: Ein erfindungsgemäße Rastermikroskop,
- Fig. 2: eine Detailansicht eines erfindungsgemäßen Rastermikroskops,
- Fig. 3: eine Detailansicht eines spektral aufspaltenden Bauteils und
- Fig. 4: eine Detailansicht eines weiteren spektral aufspaltenden Bauteils.

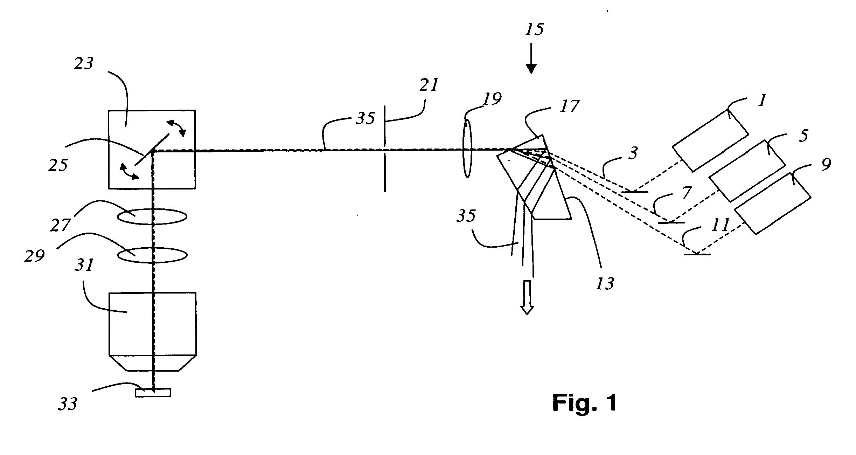

Fig. 1 zeigt ein erfindungsgemäßes Rastermikroskop mit einer ersten Lichtquelle 1, die einen ersten Beleuchtungslichtstrahl 3, der eine Wellenlänge von 488 nm aufweist, erzeugt und mit einer zweiten Lichtquelle 5, die einen zweiten Beleuchtungslichtstrahl 7, der eine Wellenlänge von 560 nm aufweist, erzeugt und mit einer dritten Lichtquelle 9, die einen dritten Beleuchtungslichtstrahl 11, der eine Wellenlänge von 633 nm aufweißt, erzeugt. Die Beleuchtungslichtstrahlen 3, 7 und 11 (gestrichelt dargestellt) treffen auf die teilweise beschichtete Grenzfläche 13 des spektral aufspaltenden Bauteils 15, das als Prisma 17 ausgeführt ist. Die Grenzfläche 13 des Prismas 17 weist reflektierende und nicht reflektierende Bereiche auf. Die Beleuchtungslichtstrahlen 3, 7 und 11 treffen zwischen den reflektierenden Bereichen auf nicht reflektierende Bereiche, so dass die Beleuchtungslichtstrahlen 3, 7, 11 in das Prisma transmittiert werden und nach dem Austreten durch eine andere Grenzfläche des Prismas und nach Passieren der Feldlinse 19 durch die Lochblende 21 kollinear vereinigt zu der Strahlablenkeinrichtung 23, die einen kardanisch aufgehängten Scanspiegel 25 beinhaltet, gelangt. Die Strahlablenkeinrichtung 23 führt die kollinear vereinigten Beleuchtungslichtstrahlen 3, 7, 11 durch die Scanlinse 27 und die Tubuslinse 29 sowie durch das Objektiv 31 durch bzw. über die Probe 33. Das von der Probe ausgehende Detektionslicht 35 gelangt auf dem selben Lichtweg, nämlich durch das Objektiv 31, die Tubuslinse 29, die Scanlinse 27 und über die Strahlablenkeinrichtung 23 zurück zur Lochblende 21, passiert diese und wird nach Durchlaufen der Feldlinse 19 von dem Prisma 17 räumlich spektral aufgespalten. Beim Durchlaufen des Prismas 17 wird das Detektionslicht an der Grenzfläche 13 von den reflektierend beschichteten Teilen intern reflektiert und tritt räumlich spektral aufgspalten durch eine dritte Grenzfläche aus dem Prisma 17 aus, um zu den nicht gezeigten Detektoren zu gelangen.

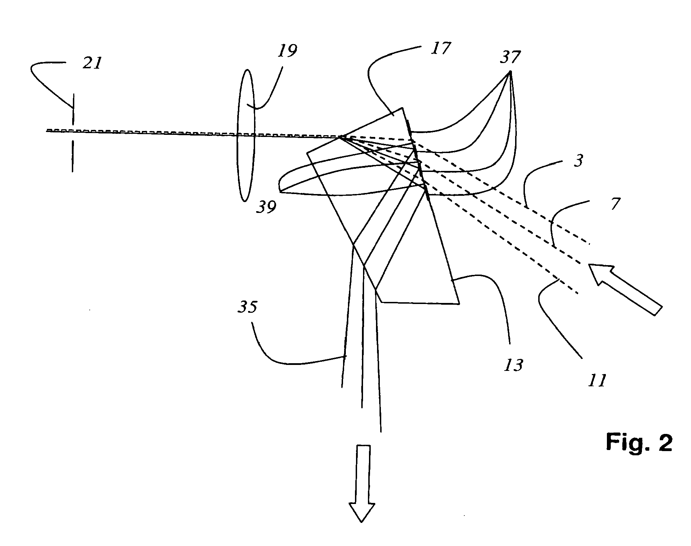

Fig. 2 zeigt eine Detailansicht des erfindungsgemäßen Rastermikroskops, das in Fig. 1 dargestellt ist. Die Grenzfläche 13 des Prismas weist reflektierende Bereiche 37, an denen das Detektionslicht intern reflektiert wird, und antireflexbeschichtete Bereiche 39, durch die die Beleuchtungslichtstrahlen 3, 7 und 11 eingekoppelt werden, auf. Die Lochblende 21 dient in dieser Konfiguration sowohl als Beleuchtungs- als auch als Detektionslochblende.

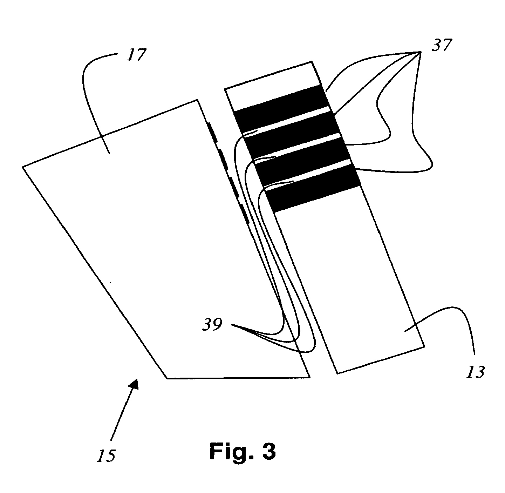

Fig. 3 zeigt eine Detailansicht des spektral aufspaltenden Bauteils 15 in Seitenansicht und in Ansicht auf die beschichtete Grenzfläche 13. Abwechselnd finden sich auf der Grenzfläche 13 reflektierende Bereiche 37 und nicht reflektierende Bereiche, die antireflexbeschichtet sind 39. Die Breite der nicht reflektierenden Bereiche 39 ist im Verhältnis zur Breite der reflektierenden Bereiche übertrieben groß dargestellt. Um große Lücken im Detektionsspektrum zu vermeiden, beträgt die Breite der nicht reflektierenden Bereiche nur Bruchteile von mm, während die Breite der reflektierenden Bereiche im Bereich von Bruchteilen von Zentimetern liegt.

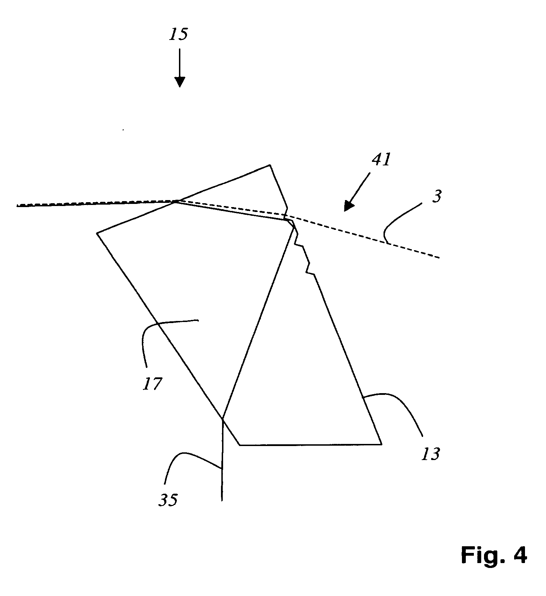

Fig. 4 zeigt eine Detailansicht eines weiteren spektral aufspaltenden Bauteils, dass ebenfalls als Prisma ausgeführt ist. Die Grenzfläche 13 weist eine Sägezahnstruktur 41 auf. Bei dieser Variante wird das Detektionslicht total intern reflektiert, während das Beleuchtungslicht die Grenzfläche 13 an den Stellen passiert, an denen der Grenzwinkel der Totalreflexion aufgrund der Sägezahnstruktur nicht vorliegt.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: erste Lichtquelle
- 3: erster Beleuchtungslichtstrahl
- 5: zweite Lichtquelle
- 7: zweiter Beleuchtungslichtstrahl
- 9: dritte Lichtquelle
- 11: dritter Beleuchtungslichtstrahl
- 13: Grenzfläche
- 15: spektral aufspaltendes Bauteil
- 17: Prisma
- 19: Feldlinse
- 21: Lochblende
- 23: Strahlablenkeinrichtung
- 25: Scanspiegel
- 27: Scanlinse
- 29: Tubuslinse
- 31: Objektiv
- 33: Probe
- 35: Detektionslicht
- 37: reflektierende Bereiche
- 39: antireflexbeschichtete Bereiche
- 41: Sägezahnstruktur

## Patentansprüche

1. Fluoreszenz-Rastermikroskop mit mehreren Lichtquellen (1,5,9), die jeweils einen Beleuchtungsstrahlengang (3,7,11) definieren, und mit einem Spektraldetektor zum Detektieren des von der Probe (33) ausgehenden Fluoreszenz-Detektionslichtes, der einen Detektionsstrahlengang definiert, und mit einem Prisma (17), wobei das Prisma (17) den Beleuchtungs- und den Detektionsstrahlengang trennt und eine Grenzfläche (13) aufweist, die reflektierende Bereiche (37) und nicht reflektierende Bereiche (39) aufweist **dadurch gekennzeichnet, dass** die reflektierenden und nicht reflektierenden Bereiche (37, 39) abwechselnd nebeneinander so angeordnet sind, dass die Beleuchtungslichtstrahlen (3, 7, 11) jeweils auf die nicht reflektierenden Bereiche (39) treffen und in das Prisma (17) transmittieren und dass das Prisma (17) das Fluoreszenz-Detektionslicht räumlich spektral aufspaltet und die reflektierenden Bereiche (37) das Fluoreszenz-Detektionslicht intern reflektieren.

2. Fluoreszenz-Rastermikroskop mit mehreren Lichtquellen (1,5,9), die jeweils einen Beleuchtungsstrahlengang (3,7,11) definieren, und mit einem Spektraldetektor zum Detektieren des von der Probe (33) ausgehenden Fluoreszenz-Detektionslichtes, der einen Detektionsstrahlengang definiert, und mit einem Prisma (17), wobei das Prisma (17) den Beleuchtungs- und den Detektionsstrahlengang trennt und eine Grenzfläche (13) aufweist, die reflektierende Bereiche (37) und nicht reflektierende Bereiche (39) aufweist, **dadurch gekennzeichnet, dass** die reflektierenden und nicht reflektierenden Bereiche (37, 39) abwechselnd nebeneinander so angeordnet sind, dass die reflektierenden Bereiche (37) jeweils die Beleuchtungslichtstrahlen (3, 7, 11) in dem Prisma (17) intern reflektieren und dass das Prisma (17) das Fluoreszenz-Detektionslicht räumlich spektral aufspaltet und das Fluoreszenz-Detektionslicht durch die nicht reflektierenden Bereiche (39) des Prismas (17) transmittiert.

3. Fluoreszenz-Rastermikroskop nach einem der Ansprüche 1 oder 2, **dadurch gekennzeichnet, dass** b.w. reflektierend beschichtet und nicht reflektierend beschichtet sind.

4. Fluoreszenz-Rastermikroskop nach Anspruch 3 , **dadurch gekennzeichnet, dass** die nicht reflektierend beschichteten Teile der Grenzfläche (13) eine Antireflexbeschichtung aufweisen.

5. Fluoreszenz-Rastermikroskop nach einem der Ansprüche 1 oder 2, **dadurch gekennzeichnet, dass** die Grenzfläche (13) dichroitisch beschichtet ist.

6. Fluoreszenz-Rastermikroskop nach einem der Ansprüche 1 oder 2, **dadurch gekennzeichnet, dass** die Grenzfläche (13) des Prismas gestuft oder sägezahnförmig strukturiert ist.

7. Fluoreszenz-Rastermikroskop nach Anspruch 6, auf Anspruch, rückbezogen, **dadurch gekennzeichnet, dass** die Grenzfläche (13) das Detektionslicht total intern reflektiert, indem die abwechselnd nebeneinander angeordneten Bereiche (37, 39) der Grenzfläche total intern reflektierend und nicht intern reflektierend sind.

8. Fluoreszenz-Rastermikroskop nach Anspruch 6, auf Anspruch 2 rückbezogen, **dadurch gekennzeichnet, dass** die Grenzfläche (13) das Beleuchtungslicht total intern reflektiert, indem die abwechselnd nebeneinander angeordneten Bereiche (37, 39) der Grenzfläche total intern reflektierend und nicht total reflektierend sind.

9. Fluoreszenz-Rastermikroskop nach einem der Ansprüche 7 oder 8, **dadurch gekennzeichnet, dass** die Grenzfläche Stege aus einem Material trägt, das einen anderen Brechungsindex als das Prisma aufweist.

10. Fluoreszenz-Rastermikroskop nach einem der Ansprüche 1 bis 9, **dadurch gekennzeichnet, dass** das Rastermikroskop ein konfokales Rastermikroskop ist.

## Claims

1. A fluorescence scanning microscope with several light sources (1, 5, 9) which each define an illumination beam path (3, 7, 11), and with a spectral detector for detecting the fluorescence detection light emanating from the sample (33), which spectral detector defines a detection beam path, and with a prism (17), the prism (17) separating the illumination beam path and the detection beam path and having a boundary surface (13) which has reflective areas (37) and non-reflective areas (39), **characterized in that** the reflective and the non-reflective areas (37, 39) are alternatingly arranged next to one another such that each of the illumination light beams (3, 7, 11) hits the non-reflective areas (39) and transmit into the prism (17) and **in that** the prism (17) spatially spectrally splits the fluorescence detection light and the reflective areas (37) internally reflect the fluorescence detection light.

2. The fluorescence scanning microscope with several light sources (1, 5, 9) which each define an illumination beam path (3, 7, 11), and with a spectral detector for detecting the fluorescence detection light emanating from the sample (33), which spectral detector defines a detection beam path, and with a prism (17), the prism (17) separating the illumination beam path and the detection beam path and having a boundary surface (13) which has reflective areas (37) and non-reflective areas (39), **characterized in that** the reflective and the non-reflective areas (37, 39) are alternatingly arranged next to one another such that each of the reflective areas (37) internally reflect the illumination light beams (3, 7, 11) in the prism (17) and **in that** the prism (17) spatially spectrally splits the fluorescence detection light and the fluorescence detection light transmits through the non-reflective areas (39) of the prism (17).

3. The fluorescence scanning microscope according to one of the claims 1 or 2, **characterized in that** the areas (37, 39) of the boundary surface which are alternatingly arranged next to one another are reflectively and non-reflectively coated.

4. The fluorescence scanning microscope according to claim 3, **characterized in that** the non-reflective coated portions of the boundary surface (13) have an anti-reflective coating.

5. The fluorescence scanning microscope according to one of the claims 1 or 2, **characterized in that** the boundary surface (13) is dichroically coated.

6. The fluorescence scanning microscope according to one of the claims 1 or 2, **characterized in that** the boundary surface (13) of the prism is structured in a stepped or serrated manner.

7. The fluorescence scanning microscope according to claim 6, dependent on claim 1, **characterized in that** the boundary surface (13) totally internally reflects the detection light **in that** the areas (37, 39) of the boundary surface which are alternatingly arranged next to one another are totally internally reflective and non-totally internally reflective.

8. The fluorescence scanning microscope according to claim 6, dependent on claim 2, **characterized in that** the boundary surface (13) totally internally reflects the illumination light **in that** the areas (37, 39) of the boundary surface which are alternatingly arranged next to one another are totally internally reflective and non-totally reflective.

9. The fluorescence scanning microscope according to one of the claims 7 or 8, **characterized in that** the boundary surface carries ribs of a material that has a different index of refraction than the prism.

10. The fluorescence scanning microscope according to one of the claims 1 to 9, **characterized in that** the scanning microscope is a confocal scanning microscope.

## Revendications

1. Microscope à balayage à fluorescence comprenant plusieurs sources de lumière (1, 5, 9), qui définissent à chaque fois une trajectoire de faisceau d'éclairage (3, 7, 11), et un détecteur spectral pour la détection de la lumière de détection à fluorescence partant de l'échantillon (33), qui définit une trajectoire de faisceau de détection, et un prisme (17), le prisme (17) séparant la trajectoire de faisceau d'éclairage et la trajectoire de faisceau de détection et présentant une surface limite (13), qui présente des zones (37) réfléchissantes et des zones (39) non réfléchissantes, **caractérisé en ce que** les zones (37, 39) réfléchissantes et non réfléchissantes sont disposées alternativement les unes à côté des autres, de sorte que les faisceaux de lumière d'éclairage (3, 7, 11) arrivent à chaque fois sur les zones (39) non réfléchissantes et sont transmis dans le prisme (17) et **en ce que** le prisme (17) divise la lumière de détection à fluorescence dans l'espace au plan spectral et les zones (37) réfléchissantes réfléchissent la lumière de détection à fluorescence au plan interne.

2. Microscope à balayage à fluorescence comprenant plusieurs sources de lumière (1, 5, 9), qui définissent à chaque fois une trajectoire de faisceau d'éclairage (3, 7, 11), et un détecteur spectral pour la détection de la lumière de détection à fluorescence partant de l'échantillon (33), qui définit une trajectoire de faisceau de détection, et un prisme (17), le prisme (17) séparant la trajectoire de faisceau d'éclairage et la trajectoire de faisceau de détection, et présente une surface limite (13), qui présente des zones réfléchissantes (37) et des zones non réfléchissantes (39), **caractérisé en ce que** les zones réfléchissantes et les zones non réfléchissantes (37, 39) sont disposées alternativement les unes à côté des autres, de telle sorte que les zones réfléchissantes (37) réfléchissent à chaque fois les trajectoires de lumière d'éclairage (3, 7, 11) dans le prisme (17) au plan interne et **en ce que** le prisme (17) divise la lumière de détection à fluorescence dans l'espace au plan spectral et transmet la lumière de détection à fluorescence par les zones (39) non réfléchissantes du prisme (17).

3. Microscope à balayage à fluorescence selon l'une quelconque des revendications 1 ou 2, **caractérisé en ce que** les zones (37, 39) disposées alternativement les unes à côté des autres de la surface limite sont recouvertes de façon réfléchissante et ne sont pas recouvertes de façon réfléchissante.

4. Microscope à balayage à fluorescence selon la revendication 3, **caractérisé en ce que** les parties recouvertes de façon non réfléchissante de la surface limite (13) présentent un revêtement antireflet.

5. Microscope à balayage à fluorescence selon l'une quelconque des revendications 1 ou 2, **caractérisé en ce que** la surface limite (13) est revêtue de façon dichroïque.

6. Microscope à balayage à fluorescence selon l'une quelconque des revendications 1 ou 2, **caractérisé en ce que** la surface limite (13) du prisme est structuré de façon étagée ou en dents de scie.

7. Microscope à balayage à fluorescence selon la revendication 6 par rapport à la revendication 1, **caractérisé en ce que** la surface limite (13) réfléchit complètement au plan interne la lumière de détection du fait que les zones (37, 39) disposées alternativement les unes à côté des autres de la surface limite sont totalement réfléchissantes au plan interne et non totalement réfléchissantes au plan interne.

8. Microscope à balayage à fluorescence selon la revendication 6 par rapport à la revendication 2, **caractérisé en ce que** la surface limite (13) réfléchit la lumière d'éclairage totalement au plan interne du fait que les zones (37, 39) disposées alternativement les unes à côté des autres de la surface limite sont totalement réfléchissantes au plan interne et non totalement réfléchissantes.

9. Microscope à balayage à fluorescence selon l'une quelconque des revendications 7 ou 8, **caractérisé en ce que** la surface limite porte des nervures à base d'un matériau, qui présente un autre indice de réfraction que le prisme.

10. Microscope à balayage à fluorescence selon l'une quelconque des revendications 1 ou 9, **caractérisé en ce que** le microscope à balayage est un microscope à balayage à foyer commun.
